# EUROPÄISCHE PATENTSCHRIFT

(11) **EP 2 736 656 B1**
(45) Veröffentlichungstag und Bekanntmachung des Hinweises auf die Patenterteilung: **14.11.2018**
(21) Anmeldenummer: 12737209.2
(22) Anmeldetag: 13.07.2012
(51) Int. Cl.: B05B 14/43, B01D 45/08

(54) **VERFAHREN UND VORRICHTUNG ZUM ABSCHEIDEN VON OVERSPRAY SOWIE ANLAGE MIT EINER SOLCHEN**
METHOD AND DEVICE FOR PRECIPITATING OVERSPRAY AND INSTALLATION PROVIDED THEREWITH
PROCÉDÉ ET DISPOSITIF DESTINÉS À SÉPARER DES AÉROSOLS DE PEINTURE EXCÉDENTAIRES AINSI QU'INSTALLATION COMPORTANT UN TEL

(30) Priorität: 27.07.2011 DE 102011108631
(43) Veröffentlichungstag der Anmeldung: 04.06.2014
(73) Patentinhaber: Eisenmann SE, 71032 Böblingen (DE)
(72) Erfinder: LINK, Kersten, 71120 Grafenau (DE); RÖCKLE, Jürgen, 71106 Magstadt (DE)
(74) Vertreter: Ostertag & Partner Patentanwälte mbB
(86) Internationale Anmeldenummer: PCT/EP2012/002948
(87) Internationale Veröffentlichungsnummer: WO 2013/013780

(56) Entgegenhaltungen:
- WO-A2-03/084638
- DE-A1- 2 552 326
- DE-A1- 19 930 709
- DE-A1-102007 041 008
- DE-U1- 20 109 800
- DE-U1-202005 013 403

## Beschreibung

Die Erfindung betrifft ein Verfahren zum Abscheiden von Overspray aus der mit Overspray beladenen Kabinenluft von Beschichtungsanlagen, insbesondere von Lackieranlagen, bei welchem der Overspray von einem Luftstrom aufgenommen und zu einer Abscheidevorrichtung geführt wird, wo ein Großteil zumindest der Feststoffe aus dem Overspray abgeschieden wird, wobei die mit Overspray beladene Kabinenluft durch Filtermodule geleitet wird, in denen sich Overspray abscheidet und welche als austauschbare Einweg-Baueinheiten mit Filtergehäuse und Filtereinheit ausgebildet sind, wobei jedes Filtermodul nach Erreichen einer Grenzbeladung mit Overspray gegen ein leeres Filtermodul ausgetauscht wird.

Außerdem betrifft die Erfindung eine Vorrichtung zum Abscheiden von Overspray aus der mit Overspray beladenen Kabinenluft von Beschichtungsanlagen, insbesondere von Lackieranlagen, bei welcher
a) die Abscheidevorrichtung mit Filtermodulen arbeitet, durch welche mit Overspray beladene Kabinenluft leitbar ist und in denen sich Overspray abscheidet;
b) die Filtermodule als austauschbare Einweg-Baueinheiten mit Filtergehäuse und Filtereinheit ausgebildet sind;
c) die Abscheidevorrichtung Mittel umfasst, durch welche jedes Filtermodul nach Erreichen einer Grenzbeladung mit Overspray gegen ein leeres Filtermodul austauschbar ist.

Ferner befasst sich die Erfindung mit einer Anlage zum Beschichten, insbesondere zum Lackieren von Gegenständen, insbesondere von Fahrzeugkarosserien, mit
a) einer Beschichtungskabine, in welcher die Gegenstände mit Beschichtungsmaterial beaufschlagbar sind und durch welche ein Luftstrom geleitet werden kann, der entstehendes Overspray des Beschichtungsmaterials aufnimmt und abführt;
b) einer Abscheidevorrichtung, welcher diese Kabinenluft zuführbar ist und wo ein Großteil zumindest der Feststoffe aus dem Overspray abgeschieden wird,

Ein Verfahren, eine Vorrichtung und eine Anlage der eingangs genannten Art sind aus der DE 20 2005 013 403 U1 bekannt. Verschiedene Filterstrukturen beschreiben die WO 2003/084 683 A2, die DE 201 09 800 U1 oder die DE 25 52 326 A1.

Bei der manuellen oder automatischen Applikation von Lacken auf Gegenstände wird ein Teilstrom des Lackes, der im Allgemeinen sowohl Festkörper und/oder Bindemittel als auch Lösemittel enthält, nicht auf den Gegenstand appliziert. Dieser Teilstrom wird in der Fachwelt "Overspray" genannt. Im Weiteren werden die Begriffe Overspray, Overspraypartikel oder Oversprayfeststoffe immer im Sinne eines dispersen Systems, wie einer Emulsion oder Suspension oder einer Kombination daraus, verstanden. Der Overspray wird von dem Luftstrom in der Lackierkabine erfasst und einer Abscheidung zugeführt, sodass die Luft gegebenenfalls nach einer geeigneten Konditionierung wieder in die Beschichtungskabine zurückgeleitet werden kann.

Insbesondere bei Anlagen mit größerem Lackverbrauch, beispielsweise bei Anlagen zum Lackieren von Fahrzeugkarosserien, kommen bevorzugt Nassabscheidesysteme zum Einsatz. Bei vom Markt her bekannten Nassabscheidern fließt Wasser gemeinsam mit der von oben kommenden Kabinenabluft zu einer die Luftströmung beschleunigenden Düse. In dieser Düse findet eine Verwirbelung der durchströmenden Kabinenabluft mit dem Wasser statt. Bei diesem Vorgang treten die Overspraypartikel weitgehend in das Wasser über, so dass die Luft den Nassabscheider im Wesentlichen gereinigt verlässt und sich die Lack-Overspraypartikel entklebt in dem Wasser befinden. Aus diesem können sie dann wiedergewonnen oder entsorgt werden.

Bei bekannten Nassabscheidern wird verhältnismäßig viel Energie zur Umwälzung der erforderlichen recht großen Wassermengen benötigt. Die Aufbereitung des Spülwassers ist durch den hohen Einsatz an Lack bindenden und entklebenden Chemikalien und durch die Lackschlammentsorgung kostenintensiv. Weiterhin nimmt die Luft durch den intensiven Kontakt mit dem Spülwasser sehr viel Feuchtigkeit auf, was im Umluftbetrieb wiederum einen hohen Energieverbrauch für die Luftaufbereitung zur Folge hat.

Bei vom Markt her bekannten Vorrichtungen der eingangs genannten Art wird demgegenüber auf trockenem Wege abgeschieden. Dabei haben sich insbesondere elektrostatisch arbeitende Abscheider etabliert, bei denen der Lack-Overspray an einer Abscheidefläche vorbeigeführt und dort abgeschieden wird, indem die Overspraypartikel durch eine Elektrodeneinrichtung ionisiert werden und auf Grund des zwischen der Abscheidefläche und der Elektrodeneinrichtung aufgebauten elektrischen Feldes zur Abscheidefläche wandern. Die an der Abscheidefläche haftenden Lack-Overspraypartikel können dann beispielsweise mechanisch von dieser abgestreift und abtransportiert werden.

Die Reinigungswirkung derartiger Abscheider ist zwar sehr hoch. Für einen kontinuierlichen Betrieb muss jedoch stets dafür gesorgt werden, dass sich zwischen der Abscheidefläche und der Elektrodeneinrichtung ein ausreichend starkes elektrisches Feld ausbilden kann, was nur bis zu einer gewissen Schichtdicke von Lack-Overspray auf der Abscheidefläche möglich ist, da eine solche Schicht isolierend wirkt. Die erforderliche kontinuierliche Entfernung des Lack-Oversprays von der Abscheidefläche ist jedoch mit baulich recht aufwendigen Maßnahmen verbunden und kann störanfällig sein. Es kann zudem vorkommen, dass Overspray an der Abscheidefläche derart reagiert, aushärtet oder trocknet, so dass dieser nicht mehr durch einfaches Abstreifen von der Abscheidefläche entfernt werden kann. Zudem ist der Energieaufwand bei solchen Abscheidern verhältnismäßig hoch.

Aufgabe der vorliegenden Erfindung ist es daher, ein Verfahren, eine Abscheidevorrichtung und eine Anlage der eingangs genannten Art zu schaffen, welche diesen Problemen Rechnung tragen.

Diese Aufgabe wird bei einem Verfahren der eingangs genannten Art dadurch gelöst, dass
der mit Overspray beladene Luftstrom über einen Luftleitkanal zu einem Filtermodul geleitet wird
und
das Filtergehäuse einen Filtereinlass aufweist, der komplementär zu einem Kanalauslassstutzen des Luftleitkanals ausgebildet ist.

Die Erfindung beruht auf der Erkenntnis, dass Einweg-Filtermodule entgegen einer landläufigen Meinung kostengünstig und zudem auch umweltverträglich sind. Die Aufbereitung und/oder Entsorgung von derartigen Einweg-Filtermodulen ist energetisch und auch im Hinblick auf die erforderlichen Ressourcen verträglicher als der Aufwand bei einer Abscheidevorrichtung, bei welcher der abgeschiedene Lack in einem kontinuierlichen Prozess von vorhandenen Abscheideflächen entfernt wird.

Aus diesen Gründen ist es folglich günstig, wenn ein ausgetauschtes und mit Overspray beladenes Filtermodul einem Entsorgungs- und/oder Recyclingprozess zugeführt wird.

Es hat sich als besonders effektiv herausgestellt, wenn als Filtereinheit ein Trägheitsfilter verwendet wird. Ein Trägheitsfilter kann vorteilhaft ohne externe Energiezufuhr betrieben werden und bewirkt eine effektive Abscheidung von Overspray.

Im Hinblick auf eine Abscheidevorrichtung der eingangs genannten Art wird die oben genannte Aufgabe dadurch gelöst, dass
d) der mit Overspray beladene Luftstrom über einen Luftleitkanal zu einem Filtermodul leitbar ist;
e) das Filtergehäuse einen Filtereinlass aufweist, der komplementär zu einem Kanalauslassstutzen des Luftleitkanals ausgebildet ist.

Die Vorteile entsprechen den oben zum Verfahren erläuterten Vorteilen.

In analoger Weise ist es günstig, wenn die Filtereinheit als Trägheitsfilter ausgebildet ist.

Um eine hohe Abscheidewirkung zu erreichen, ist es dabei besonders von Vorteil, wenn die Filtereinheit eine Vielzahl von Abscheideelementen umfasst, die so angeordnet sind, dass ein Strömungslabyrinth ausgebildet ist.

Vorzugsweise verlaufen die Abscheideelemente vertikal und werden in horizontaler Richtung von Kabinenluft umströmt. Der Overspray kann dann nach unten an den Abscheideelementen abfließen.

Wenn der Abstand der Abscheideelemente voneinander in Strömungsrichtung und/oder in einer Richtung senkrecht zur Strömungsrichtung kleiner wird, werden auch zum Ende des Strömungsweges durch die Filtereinheit noch in der Kabinenluft vorhandene Overspraypartikel effektiv abgeschieden.

In der Praxis haben sich als Abscheideelemente Filterlamellen, Filterhülsen, Fachstrukturen oder Kammerstrukturen als günstig erwiesen.

Wenn ein Filtermodul ein als standardisierte Tragstruktur ausgebildetes Bodenteil umfasst, kann es mittels bekannter Fördersysteme, die bereits an derartige standardisierte Tragstrukturen angepasst sind, gefördert werden.

Im Hinblick auf die Aufbereitung oder Entsorgung des Einweg-Filtermoduls ist es besonders vorteilhaft, wenn eine Komponente, mehrere Komponenten oder alle Komponenten des Filtermoduls aus einem nassfesten Recyclingmaterial gefertigt sind.

Als nassfestes Recyclingmaterial ist dabei vorzugsweise eines oder mehrere der nachfolgenden Materialien gewählt: Papier- und Pappmaterialien, Wellkarton, Kartone mit stehender Welle, Kartone mit Wabenstruktur oder Wickelkartone, MDF-Material, Holz. Auch Kunststoffe wie insbesondere Polyethylen oder Polypropylen sind geeignet.

Es kann von Vorteil sein, wenn das Filtermodul als modularer Bausatz ausgebildet ist. In diesem Fall kann ein Filtermodul vor Ort aufgebaut werden und kann platzsparend, z.B. zusammengefaltet, zum Ort seiner Verwendung transportiert werden.

Um abgeschiedenen Overspray effektiv aufzufangen, ist es günstig, wenn das Filtermodul eine Sammelwanne umfasst, in welcher sich abgeschiedener Overspray sammelt.

Die Sammelwanne kann beispielsweise einen Aufnahmesack umfassen, welcher am Boden des Filtermoduls angeordnet ist.

Die oben genannte Aufgabe wird nun bei einer Anlage der eingangs genannten Art dadurch gelöst, dass sie eine Abscheidevorrichtung mit einigen oder allen der oben genannten Merkmale umfasst.

Die dadurch erzielbaren Vorteile entsprechen den oben zur Abscheidvorrichtung erläuterten Vorteilen.

Nachfolgend werden Ausführungsbeispiele der Erfindung anhand der Zeichnungen näher erläutert. In diesen zeigen:
- Figur 1: eine Lackierkabine einer Oberflächenbehandlungsanlage mit einer Abscheidevorrichtung für Overspray in einer Vorderansicht;
- Figur 2: in größerem Maßstab einen Teilschnitt der Lackierkabine von Figur 1 entlang der dortigen Schnittlinie II-II;
- Figur 3: eine perspektivische Ansicht eines Filtermoduls der Abscheidevorrichtung, wobei ein Teil eines Filtergehäuses weggebrochen gezeigt ist;
- Figur 4: eine der Figur 3 entsprechende perspektivische Ansicht eines abgewandelten Filtermoduls;
- Figur 5: in vergrößertem Maßstab eine der Figur 1 entsprechende Ansicht auf einen abgewandelten Abscheidebereich der Lackierkabine;
- Figur 6: eine der Figur 4 entsprechende Ansicht auf ein nochmals abgewandeltes Filtermodul;
- Figur 7: eine Seitenansicht des Filtermoduls nach Figur 6, wobei eine Sammelwanne im Schnitt gezeigt ist.

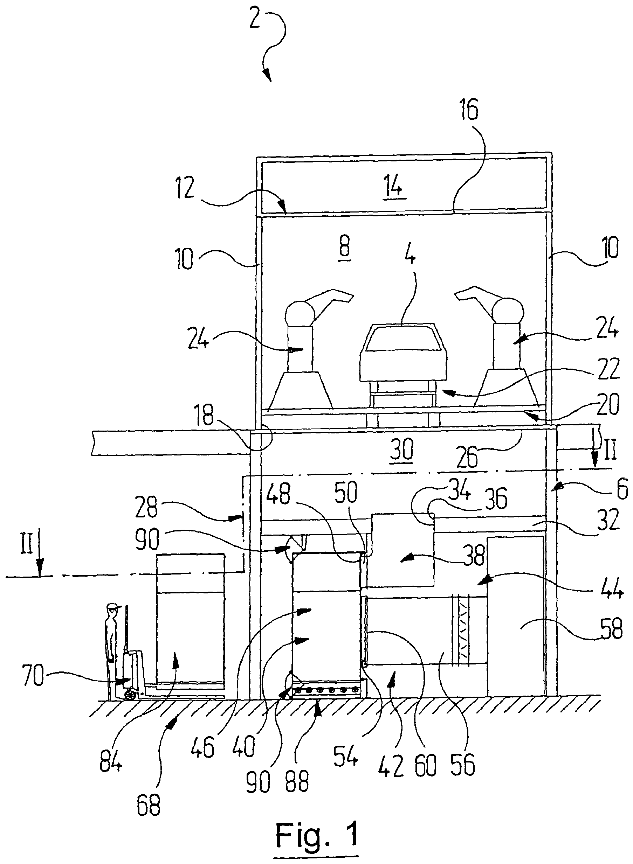

In Figur 1 ist mit 2 insgesamt eine Lackierkabine einer Oberflächenbehandlungsanlage bezeichnet, in welcher Fahrzeugkarosserien 4 lackiert werden, nachdem sie in der Lackierkabine 2 vorgelagerten, nicht eigens gezeigten Vorbehandlungsstationen z.B. gereinigt und entfettet wurden. Die Lackierkabine 2 ruht auf einem Stahlbau 6, wie es an und für sich bekannt ist.

Die Lackierkabine 2 umfasst einen oben angeordneten Lackiertunnel 8, welcher von vertikalen Seitenwänden 10 und einer horizontalen Kabinendecke 12 begrenzt, jedoch an den Stirnseiten offen ist. Darüber hinaus ist der Lackiertunnel 8 nach unten hin in der Weise offen, dass mit Overspray beladene Kabinenabluft nach unten strömen kann. Die Kabinendecke 12 ist in üblicher Weise als untere Begrenzung eines Luftzuführraumes 14 mit Filterdecke 16 ausgebildet.

Oberhalb einer unteren Öffnung 18 des Lackiertunnels 8 ist ein Stahlgerüst 20 angeordnet, welches eine an und für sich bekannte Fördertechnik 22 trägt, auf welches hier nicht näher eingegangen wird. Mit diesem können zu lackierende Fahrzeugkarosserien 4 von der Eingangsseite des Lackiertunnels 8 zu dessen Ausgangsseite transportiert werden. Im Inneren des Lackiertunnels 8 befinden sich Applikationseinrichtungen in Form von mehrachsigen Applikationsrobotern 24, wie sie an und für sich bekannt sind. Mittels der Applikationsroboter 24 können die Fahrzeugkarosserien 4 mit Lack beschichtet werden können.

Die untere Öffnung 18 des Lackiertunnels 8 ist durch einen begehbaren Gitterrost 26 abgedeckt. Unterhalb der Gitterrostes 26 befindet sich ein Anlagenbereich 28, in welchem die von der Kabinenluft mitgeführten Overspraypartikel von der Kabinenluft getrennt werden.

Aus dem Luftzuführraum 14 strömt also Luft nach unten durch den Lackiertunnel 8 hindurch zu dem Anlagenbereich 28, wobei die Luft im Lackiertunnel 8 vorhandenen Lack-Overspray aufnimmt und mit sich führt.

Der Anlagenbereich 28 umfasst einen Strömungsbereich 30, in den die mit Overspray beladene Kabinenluft zunächst einströmt und welcher hierzu nach oben zur Lackierkabine 2 hin offen, jedoch zur Seite von den Seitenwänden 10 und nach unten durch eine Zwischendecke 32 begrenzt ist. Die Zwischendecke 32 weist in Kabinenlängsrichtung mehrere hintereinander angeordnete Durchgänge 34 auf. Jeder dieser Durchgänge 34 führt zu einem Kanaleinlass 36 eines jeweiligen Luftleitkanals 38, in den die mit Overspraypartikeln beladene Kabinenluft zunächst insgesamt vertikal nach unten einströmt.

Der Luftleitkanal 38 lenkt die Kabinenluft dann um 90° in die Horizontale um, worauf diese dann in insgesamt horizontaler Richtung in ein Filtermodul 40 einströmt. Jedes Filtermodul 40 bildet eine Abscheideeinheit, mit welcher eine insgesamt mit 42 bezeichnete Abscheidevorrichtung arbeitet, die in einem Abscheidebereich 44 der Lackierkabine 2 vorhanden ist, der unterhalb des Strömungsbereichs 30 angeordnet ist.

Jedes Filtermodul 40 ist lösbar mit einem der Luftleitkanäle 38 verbunden. Hierzu weist jedes Filtermodul 40 ein Filtergehäuse 46 mit einem Filtereinlass 48 auf, der komplementär zu einem Kanalauslassstutzen 50 des Luftleitkanals 38 ausgebildet ist, so dass das Filtermodul 40 durch eine entsprechende horizontalen Bewegung strömungstechnisch mit dem Kanalauslassstutzen 50 des Luftleitkanals 38 verbunden oder von diesem gelöst werden kann.

Die Abscheidevorrichtung 42 ist somit beim vorliegenden Ausführungsbeispiel ein aus den Filtermodulen 40 modular aufgebautes Abscheidefilter.

Die Kabinenluft wird in dem Filtermodul 40 noch zweimal um 90° umgelenkt, durchströmt dann eine Filtereinheit in Form eines Trägheitsfilters 52, an dem sich der Lack-Overspray abscheidet, und verlässt das Filtermodul 40 durch einen Filterauslassstutzen 54 auf derselben Seite des Filtergehäuses 46, auf der sich der Filtereinlass 48 befindet. Von dort strömt die nun weitgehend von Overspraypartikeln befreite Kabinenluft in einen Zwischenkanal 56, über den sie in einen Sammelströmungskanal 58 gelangt.

Der Zwischenkanal 56 weist einen Einlassflansch 60 auf, wobei der Filterauslassstutzen 54 des Filtermodul 40 durch dessen oben angesprochene horizontalen Bewegung strömungstechnisch mit diesem Einlassflansch 60 verbunden oder von diesem gelöst werden kann. Somit ist ein Filtermodul 40 in einer Betriebsstellung betriebsbereit, wenn sein Filtereinlass 48 mit dem Kanalauslassstutzen 50 des Luftleitkanals 38 und sein Filterauslassstutzen 54 mit dem Einlassflansch 60 des Zwischenkanals 56 verbunden ist.

Die Kabinenluft wird über den Sammelströmungskanal 58 einer weiteren Aufbereitung und Konditionierung zugeführt und im Anschluss daran in einem hier nicht eigens gezeigten Kreislauf wieder in den Luftzuführraum 14 geleitet, aus dem sie wieder von oben in den Lackiertunnel 8 einströmt. Falls die Kabinenluft durch das Abscheidefilter 42 noch nicht ausreichend von Overspraypartikeln befreit ist, können dem Abscheidefilter 42 noch weitere Filterstufen nachgelagert sein, denen die Kabinenluft zugeführt wird und in denen beispielsweise Vliesfilter oder auch elektrostatisch arbeitende Abscheidefilter eingesetzt werden, wie sie an und für sich bekannt sind. Gegebenenfalls können eine oder mehrere solcher weiteren Filterstufen auch in das Filtermodul 40 integriert sein. So kann beispielsweise vor dem Filterauslassstutzen 54 ein Filtervlies angeordnet sein.

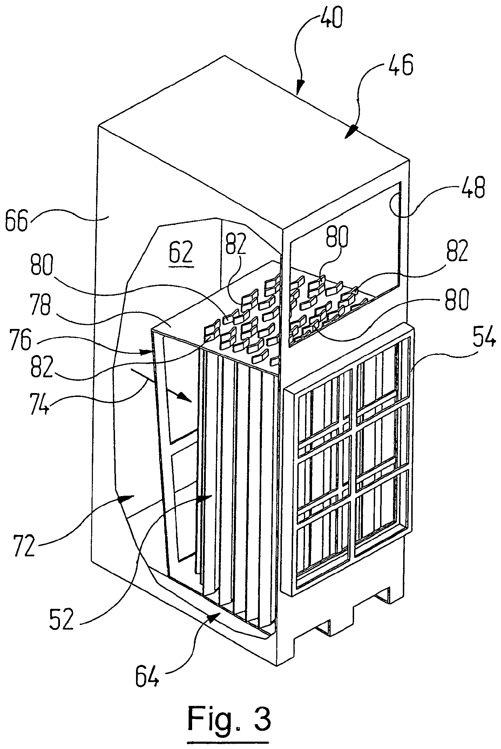

Anhand von Figur 3 wird nun eines der Filtermodule 40 näher erläutert. Wie dort zu erkennen ist, begrenzt das Filtergehäuse 46 des Filtermoduls 40 eine Strömungskammer 62, die sich zwischen dem Filtereinlass 48 und dem Filterauslassstutzen 54 erstreckt und von der Kabinenluft auf einem um 180° gekrümmten Strömungsweg durchströmt wird.

Das Filtergehäuse 46 seinerseits umfasst ein Bodenteil 64 und eine Kammerabdeckung 66, die von dem Bodenteil 64 getragen ist und bei welcher eine Kammerwand den Filtereinlass 48 und den Filterauslassstutzen 54 aufweist. Das Bodenteil 64 ist in seiner Geometrie und seinen Abmessungen als standardisierte Tragstruktur und beispielsweise nach Vorgabe einer so genannten Euro-Palette ausgebildet. Auf diese Weise kann ein Filtermodul 40 mit einem an solche Standardstrukturen angepassten Fördersystem 68 bewegt und in seine Betriebsstellung gebracht oder aus dieser entfernt werden. Dies ist in Figur 1 am Beispiel eines manuell von einer Bedienperson bedienbaren Förderhubwagens 70 angedeutet.

Die Anordnung der Filtermodule 40 in dem Abscheidebereich 44 der Lackierkabine 2 kann dementsprechend nach einem Raster erfolgen, welchen auf dem verwendeten standardisierten Bodenteil 64 beruht.

Zumindest ein unterer Sammelbereich des Filtermoduls 40 ist flüssigkeitsdicht und auf diese Weise als Sammelwanne 72 für Lack ausgebildet, der sich an dem Trägheitsfilter 52 abscheidet und darin nach unten abfließt.

Das Trägheitsfilter 52 ist in der Strömungskammer 62 so vor dem Filterauslassstutzen 54 angeordnet, dass es in einer horizontalen Richtung 74 von der mit Overspray beladenen Kabinenluft durchströmt wird. Das Trägheitsfilter 52 umfasst eine Tragstruktur 76 mit einer weitgehend horizontalen Tragplatte 78 - wie in Figur 3 zu erkennen ist, ist die Tragplatte 78 hier in Strömungsrichtung der in das Filtermodul 40 eintretenden Kabinenluft gegenüber der Horizontalen leicht nach unten geneigt - die Innen an der Gehäusewand des Filtergehäuses 46 mit dem Filtereinlass 48 und dem Filterauslassstutzen 54 befestigt ist.

Die Tragplatte 78 trägt als Abscheideelemente eine Vielzahl von sich nach unten in Richtung auf die Sammelwanne 72 erstreckende Filterlamellen 80, von denen der Übersichtlichkeit halber nur einige mit einem Bezugszeichen versehen sind. Dies kann wie beim vorliegenden Ausführungsbeispiel z.B. in der Weise erfolgen, dass die Tragplatte 78 zu den Filterlamellen 80 komplementäre Schlitze 82 aufweist, in welche die Filterlamellen 80 eingesteckt sind. Auch von den Schlitzen 82 tragen nur einige ein Bezugszeichen.

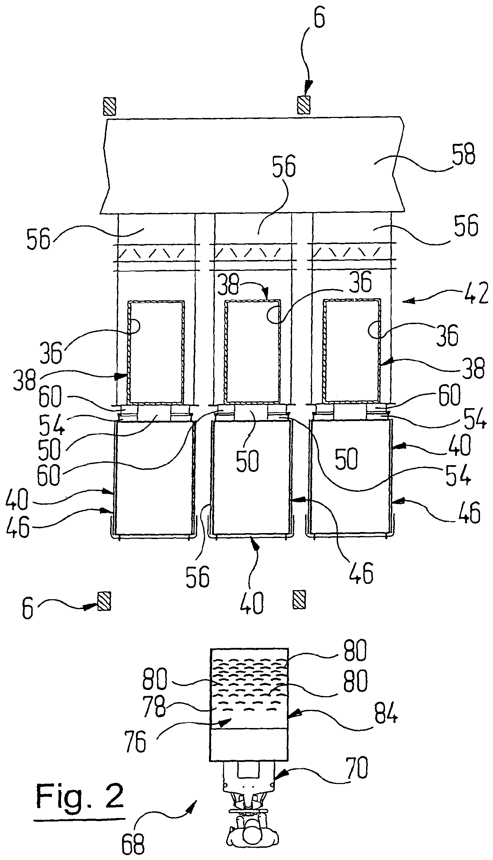

Die Filterlamellen 80 sind im Querschnitt V-förmig und derart angeordnet, dass die V-Spitze in Strömungsrichtung 74 der Luft weist, in welcher die Kabinenluft das Trägheitsfilter 52 durchströmt. Die Filterlamellen 80 sind dabei versetzt zueinander angeordnet, wobei die Anzahl der Filterlamellen 80 in Strömungsrichtung 74 der Kabinenluft zunimmt. Anders ausgedrückt wird der Abstand der Filterlamellen 80 voneinander in Strömungsrichtung 74 und in einer Richtung senkrecht dazu, d.h. hier in horizontaler Richtung, kleiner. Dieses Prinzip ist in Figur 2 bei einem in einem Vertikalschnitt gezeigten Austausch-Filtermodul 84 veranschaulicht, gegen welches ein voll beladenes Filtermodul 40 ausgetauscht werden soll.

Auf diese Weise ist in Strömungsrichtung 74 in dem Trägheitsfilter 52 ein von der Kabinenluft durchströmtes Strömungslabyrinth ausgebildet, in dem die Overspraypartikel sich in an und für sich bekannter Weise nach dem Prinzip der Massenträgheit an den Filterlamellen 80 abscheiden. Von dort fließt der Overspray nach unten in die Sammelwanne 72, wo sich der Overspray zu einem Lacksumpf ansammelt.

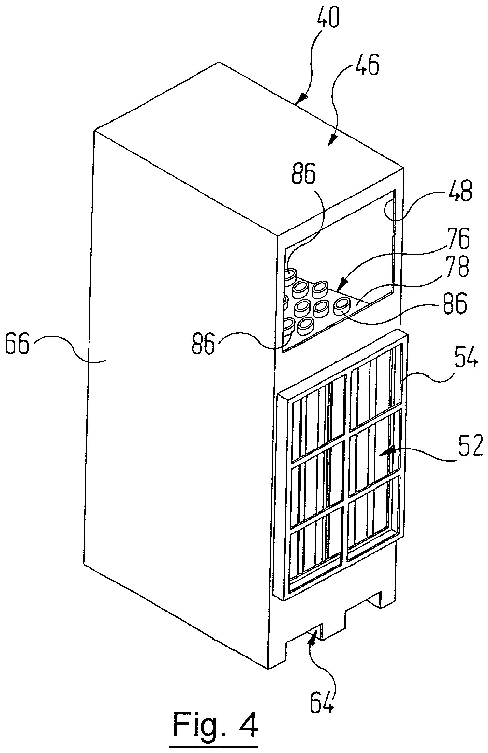

Anstelle der Filterlamellen 80 können auch in ihrer Geometrie und Abmessung anders ausgebildete Abscheideelemente verwendet werden. Figur 4 zeigt ein abgewandeltes Filtermodul 40, bei dem anstelle der Filterlamellen 80 Filterhülsen 86 von der Tragplatte 78 der Tragstruktur 76 getragen sind. Die Filterhülsen 86 sind dabei nach demselben Prinzip angeordnet, wie die Filterlamellen 80 bei dem Filtermodul 40 nach Figur 3. In der Praxis können auch andere Anordnungen der Abscheideelemente vorgesehen sein.

Statt der Filterlamellen 80 oder der Filterhülsen 86 können als Abscheideelemente auch Fachstrukturen oder Kammerstrukturen vorgesehen sein. Als Fachstrukturen können beispielsweise falt- oder steckbar miteinander verbundene Lamellen oder Platten dienen. Kammerstrukturen werden in der Praxis nach Art von Waben aufgebaut.

Wie in Figur 1 zu erkennen ist, ruht das Filtermodul 40 in seiner Betriebsstellung auf einer Waage 88 und ist mittels einer Verriegelungseinrichtung 90 oben und unten in seiner Betriebsstellung arretiert.

Jedes Filtermodul 40 ist für die Aufnahme einer maximalen Lackmenge, d.h. für eine Grenzbeladung mit Overspray, ausgelegt, die von der Bauart des Filtermoduls 40 und den verwendeten Materialien hierfür abhängt. Die bereits aufgenommene Lackmenge kann über die Waage 88 überwacht werden. Alternativ kann die Grenzbeladung mittels einer Differenzdruckbestimmung ermittelt werden. Je größer die Beladung des Filtermoduls 40 ist, desto größer ist der durch das Filtermodul 40 aufgebaute Luftwiderstand.

Wenn ein Filtermodul 40 seine maximale Aufnahmekapazität erreicht, wird die Verriegelungseinrichtung 90 gelöst, das voll beladene Filtermodul 40 aus dem Abscheidebereich 44 der Lackierkabine 2 mit dem Hubförderer 70 herausgefahren und gegen ein leeres Filtermodul 40 ausgetauscht. Zuvor wird dazu die Strömungsverbindung des auszutauschenden Filtermoduls 40 mit dem Leitkanal 38 und dem Verbindungskanal 56 unterbrochen, indem der Kanalauslassstutzen 50 des Leitkanals 38 und der Einlassflansch 60 des Verbindungskanals 56 mittels nicht eigens gezeigter Sperrschieber verschlossen werden.

Wenn das leere Filtermodul 40 in seine Betriebsstellung auf die Waage 88 gefahren ist, wird es entsprechend mit der Verriegelungseinrichtung 90 arretiert und so gegen ein unbeabsichtigtes Herausfahren aus dem Abscheidebereich 44 gesichert. Die Sperrschieber des Leitkanals 38 und des Verbindungskanals 56 werden wieder in eine Offenstellung gebracht, so dass das neu positionierte Filtermodul 40 von der Kabinenluft durchströmt wird.

Das ausgetauschte und mit Overspray beladene Filtermodul 40 wird dann einem Entsorgungs- und/oder Recyclingprozess zugeführt und somit als Einweg-Filtermodul verwendet.

Anders ausgedrückt sind die Filtermodule 40, in denen sich Overspray abscheidet, also als austauschbare Einweg-Baueinheiten mit Filtergehäuse 46 und Filtereinheit 52 ausgebildet, wobei jedes Filtermodul 40 nach Erreichen einer Grenzbeladung mit Overspray gegen ein leeres Filtermodul 40 ausgetauscht wird.

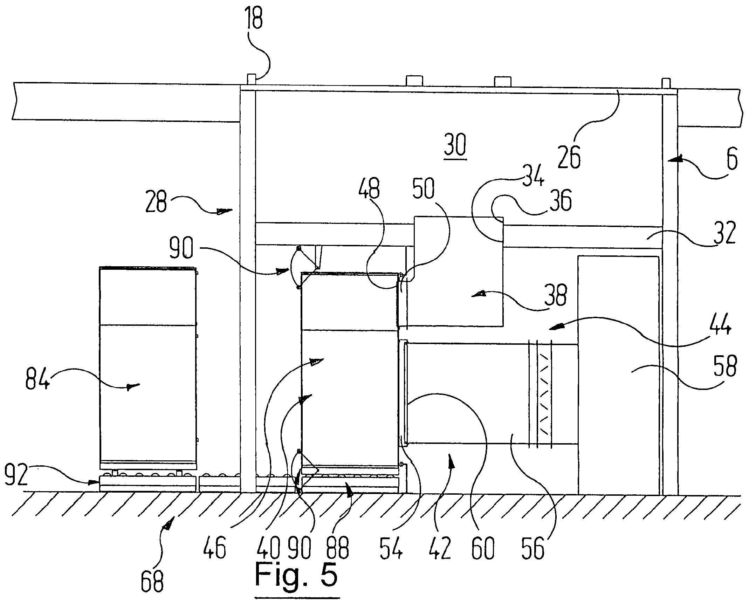

In Figur 5 ist als Abwandlung noch ein modifiziertes Fördersystem 68 gezeigt. Anstelle eines Förderhubwagens ist dort ein Rollenbahnfördersystem 92 gezeigt, welche in an und für sich bekannter Weise Rollenbahnen mit motorisch angetriebenen Rollen umfasst. Mittels des Rollenbahnfördersystems 92 können Filtermodule 40, deren Aufnahmekapazität für Lack-Overspray erschöpft ist, rechnergesteuert aus dem Abscheidebereich 44 der Lackierkabine 2 herausgefahren und durch jeweils ein unbeladenes Filtermodul 40 ersetzt werden. Das Rollenbahnfördersystem 92 umfasst hierzu zusammenwirkende Fördereinheiten, mit denen Filtermodule 40 parallel und/oder quer zur Längserstreckung der Lackierkabine 2 bewegt werden können.

Das Bodenteil 64, das Kammergehäuse 66, die Tragstruktur 76 und die Abscheideelemente 80, 86 des Filtermoduls 40 sind aus einem nassfesten Recyclingmaterial gefertigt. Allgemein ausgedrückt sind eine Komponente, mehrere Komponenten oder alle Komponenten des Filtermoduls 40 aus einem nassfesten Recyclingmaterial gefertigt. Hierfür kommen beispielsweise Cellulosematerialien wie gegebenenfalls behandelte Papier- und Pappmaterialien, Wellkarton, Kartone mit stehender Welle, Kartone mit Wabenstruktur oder Wickelkartone, aber auch anderer Materialien wie z.B. MDF-Materialien in Frage. Als Bodenteil 64 eignet sich beispielsweise auch eine Euro-Palette aus Holz. Auch Kunststoffe wie insbesondere Polyethylen oder Polypropylen kommen in Frage.

Dabei kann das Filtermodul 40 selbst als modularer Bausatz aus den genannten Komponenten in Einzelteilen geliefert werden und vor Ort zusammengebaut werden. Dabei kann das Kammergehäuse 66 beispielsweise eine klappbare Decke haben und an zwei diagonal gegenüberliegenden Längskanten zu einer zweilagigen Gehäuseplatte gefaltet sein. Das entfaltete Kammergehäuse 66 wird dann z.B. über das Trägheitsfilter 52 gestülpt, welches zuvor aus der Tragstruktur 76 und den Filterlamellen 80 oder den Filterhülsen 86 aufgebaut wurde.

Nachdem das Trägheitsfilter 52 dann an dem Kammergehäuse 66 befestigt worden ist, wird diese Baueinheit auf das Bodenteil 64 gesetzt und gegebenenfalls mit diesem verklebt.

Um die Sammelwanne 72 auszubilden, kann eine Dichtmasse in den Bodenbereich eingespritzt werden und mittels eines Taumeltisches gleichmäßig im Bodenbereich der Strömungskammer 62 verteilt werden.

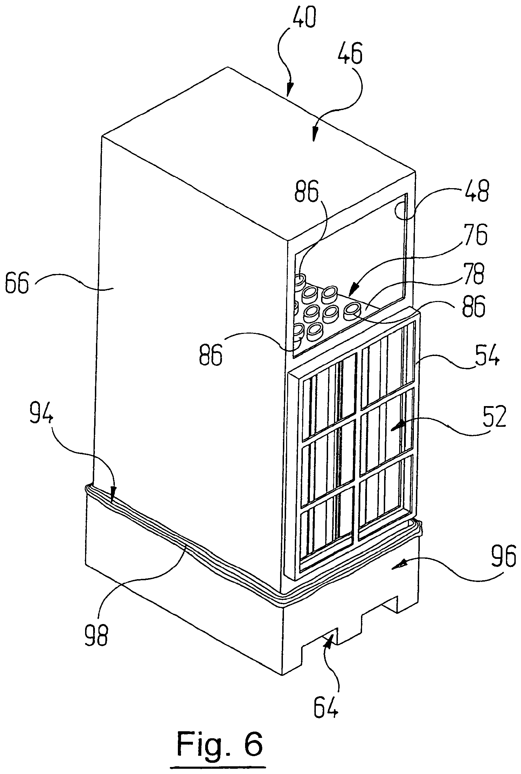

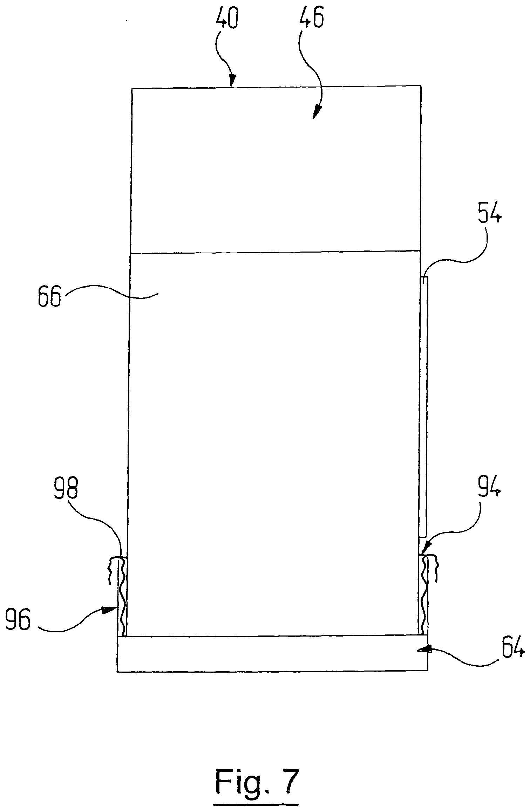

In den Figuren 6 und 7 ist eine hierzu alternative Sammelwanne 94 gezeigt. Dort trägt das Bodenteil 64 einen umlaufenden Wannenrahmen 96, welcher ebenfalls aus einem der oben genannten nassfesten Recyclingmaterialien, z.B. aus dünnen Holzbrettern, gefertigt sein kann. In den Wannenrahmen 96 ist ein flüssigkeitsdichter Aufnahmesack 98 eingelegt, in den das Kammergehäuse 66 gestellt werden kann und dessen oberer Rand nach außen über den Wannenrahmen 96 gestülpt ist. In der Praxis hat sich herausgestellt, dass so genannte Big-Bags als Aufnahmesack 98 verwendet werden können, die als Gebinde für beispielsweise Lackpulver an und für sich bekannt sind.

Durch den modularen Aufbau der Abscheidevorrichtung 42 kann diese derart kompakt ausgebildet sein, dass sie als Gesamtvorrichtung innerhalb der lichten Kontur der Lackierkabine 2 angeordnet werden kann, die bei den vorliegenden Ausführungsbeispielen durch den Stahlbau 6 vorgegeben ist. Dies ist in Figur 1 gut zu erkennen. Auf diese Weise wird die für die Lackierkabine 2 benötigte Grundfläche auch durch die Abscheidevorrichtung 42 nicht erhöht. Dadurch können auch bereits montierte Lackierkabinen nachträglich mit der Abscheidevorrichtung 42 ausgestattet werden. Diese Kompaktheit der Abscheidevorrichtung 42 als Ganzes beruht dabei auf dem kleinbauenden Aufbau der einzelnen Filtermodule 40.

## Patentansprüche

1. Verfahren zum Abscheiden von Overspray aus der mit Overspray beladenen Kabinenluft von Beschichtungsanlagen, insbesondere von Lackieranlagen, bei welchem der Overspray von einem Luftstrom aufgenommen und zu einer Abscheidevorrichtung (42) geführt wird, wo ein Großteil zumindest der Feststoffe aus dem Overspray abgeschieden wird,
wobei
die mit Overspray beladene Kabinenluft durch Filtermodule (40) geleitet wird, in denen sich Overspray abscheidet und welche als austauschbare Einweg-Baueinheiten mit Filtergehäuse (46) und Filtereinheit (52) ausgebildet sind, wobei jedes Filtermodul (40) nach Erreichen einer Grenzbeladung mit Overspray gegen ein leeres Filtermodul (40) ausgetauscht wird,
**dadurch gekennzeichnet, dass**
der mit Overspray beladene Luftstrom über einen Luftleitkanal (38) zu einem Filtermodul (40) geleitet wird
und
das Filtergehäuse (46) einen Filtereinlass (48) aufweist, der komplementär zu einem Kanalauslassstutzen (50) des Luftleitkanals (38) ausgebildet ist.

2. Verfahren nach Anspruch 1, **dadurch gekennzeichnet, dass** ein ausgetauschtes und mit Overspray beladenes Filtermodul (40) einem Entsorgungs- und/oder Recyclingprozess zugeführt wird.

3. Verfahren nach Anspruch 1 oder 2, **dadurch gekennzeichnet, dass** als Filtereinheit (52) ein Trägheitsfilter verwendet wird.

4. Vorrichtung zum Abscheiden von Overspray aus der mit Overspray beladenen Kabinenluft von Beschichtungsanlagen, insbesondere von Lackieranlagen, bei welcher
a) die Abscheidevorrichtung (42) mit Filtermodulen (40) arbeitet, durch welche mit Overspray beladene Kabinenluft leitbar ist und in denen sich Overspray abscheidet;
b) die Filtermodule (40) als austauschbare Einweg-Baueinheiten mit Filtergehäuse (46) und Filtereinheit (52) ausgebildet sind;
c) die Abscheidevorrichtung (42) Mittel (38, 56, 68, 90) umfasst, durch welche jedes Filtermodul (40) nach Erreichen einer Grenzbeladung mit Overspray gegen ein leeres Filtermodul (40) austauschbar ist;
**dadurch gekennzeichnet, dass**
d) der mit Overspray beladene Luftstrom über einen Luftleitkanal (38) zu einem Filtermodul (40) leitbar ist;
e) das Filtergehäuse (46) einen Filtereinlass (48) aufweist, der komplementär zu einem Kanalauslassstutzen (50) des Luftleitkanals (38) ausgebildet ist.

5. Abscheidevorrichtung nach Anspruch 4, **dadurch gekennzeichnet, dass** die Filtereinheit (52) als Trägheitsfilter ausgebildet ist.

6. Abscheidevorrichtung nach Anspruch 5, **dadurch gekennzeichnet, dass** die Filtereinheit (52) eine Vielzahl von Abscheideelementen (80; 86) umfasst, die so angeordnet sind, dass ein Strömungslabyrinth ausgebildet ist.

7. Abscheidevorrichtung nach Anspruch 5, **dadurch gekennzeichnet, dass** die Abscheideelemente (80; 86) vertikal verlaufen und in horizontaler Richtung (74) von Kabinenluft umströmt werden.

8. Abscheidevorrichtung nach Anspruch 6 oder 7, **dadurch gekennzeichnet, dass** der Abstand der Abscheideelemente (80; 86) voneinander in Strömungsrichtung (74) und/oder in einer Richtung senkrecht zur Strömungsrichtung (74) kleiner wird.

9. Abscheidevorrichtung nach einem der Ansprüche 6 bis 8, **dadurch gekennzeichnet, dass** als Abscheideelemente (80; 86) Filterlamellen, Filterhülsen, Fachstrukturen oder Kammerstrukturen vorhanden sind.

10. Abscheidevorrichtung nach einem der Ansprüche 4 bis 9, **dadurch gekennzeichnet, dass** ein Filtermodul (40) ein als standardisierte Tragstruktur ausgebildetes Bodenteil (64) umfasst.

11. Abscheidevorrichtung nach einem der Ansprüche 4 bis 10, **dadurch gekennzeichnet, dass** eine Komponente, mehrere Komponenten oder alle Komponenten des Filtermoduls (40) aus einem nassfesten Recyclingmaterial gefertigt sind.

12. Abscheidevorrichtung nach Anspruch 11, **dadurch gekennzeichnet, dass** als nassfestes Recyclingmaterial eines oder mehrere der nachfolgenden Materialien gewählt ist: Papier- und Pappmaterialien, Wellkarton, Kartone mit stehender Welle, Kartone mit Wabenstruktur oder Wickelkartone, MDF-Material, Holz oder Kunststoffe, insbesondere Polyethylen oder Polypropylen.

13. Abscheidevorrichtung nach einem der Ansprüche 4 bis 12, **dadurch gekennzeichnet, dass** das Filtermodul (40) als modularer Bausatz ausgebildet ist.

14. Abscheidevorrichtung nach einem der Ansprüche 4 bis 13, **dadurch gekennzeichnet, dass** das Filtermodul (40) eine Sammelwanne (72; 94) umfasst, in welcher sich abgeschiedener Overspray sammelt.

15. Abscheidevorrichtung nach Anspruch 14, **dadurch gekennzeichnet, dass** die Sammelwanne (94) einen Aufnahmesack (98) umfasst, welcher am Boden des Filtermoduls (40) angeordnet ist.

16. Anlage zum Beschichten, insbesondere zum Lackieren von Gegenständen, insbesondere von Fahrzeugkarosserien, mit
a) einer Beschichtungskabine (2), in welcher die Gegenstände (4) mit Beschichtungsmaterial beaufschlagbar sind und durch welche ein Luftstrom geleitet werden kann, der entstehendes Overspray des Beschichtungsmaterials aufnimmt und abführt;
b) einer Abscheidevorrichtung (42), welcher diese Kabinenluft zuführbar ist und wo ein Großteil zumindest der Feststoffe aus dem Overspray abgeschieden wird,
**dadurch gekennzeichnet, dass**
c) die Abscheidevorrichtung (42) nach einem der Ansprüche 4 bis 15 ausgebildet ist.

## Claims

1. Method for separating overspray from the overspray-laden booth air of coating plants, in particular of painting plants, in which overspray is absorbed by an airflow and fed to a separating device (42) where a majority of at least the solid materials is separated out of the overspray,
wherein
the overspray-laden booth air is guided through filter modules (40), in which the overspray is separated out and which are constructed as replaceable disposable units with a filter housing (46) and a filter unit (52), wherein each filter module (40) is replaced with an empty filter module (40) after reaching a threshold loading of overspray,
**characterized in that**
the overspray-laden airflow is guided to a filter module (40) via an air guide channel (38)
and
the filter housing (46) comprises a filter inlet (48), which is constructed complementary to a channel outlet connection (50) of the air guide channel (38).

2. Method according to claim 1, **characterized in that** a replaced and overspray-laden filter module (40) is supplied to a disposal and/or recycling process.

3. Method according to claims 1 or 2, **characterized in that** an inertial filter is used as the filter unit (52).

4. Device for separating overspray from the overspray-laden booth air of coating plants, in particular of painting plants, in which
a) the separating device (42) operates using filter modules (40) through which overspray-laden booth air can be guided and in which overspray is separated out;
b) the filter modules (40) are constructed as replaceable disposable units with a filter housing (46) and a filter unit (52);
b) the separating device (42) comprises means (38, 56, 68, 90) with which each filter module (40) can be replaced with an empty filter module (40) after reaching a threshold loading of overspray;
**characterized in that**
d) the overspray-laden airtflow can be guided to a filter module (40) via an air guide channel (38);
e) the filter housing (46) comprises a filter inlet (48), which is constructed complementary to a channel outlet connection (50) of the air guide channel (38).

5. Separating device according to claim 4, **characterized in that** the filter unit (52) is constructed as an inertial filter.

6. Separating device according to claim 5, **characterized in that** the filter unit (52) comprises a plurality of separating elements (80; 86), which are arranged to form a flow labyrinth.

7. Separating device according to claim 5, **characterized in that** the separating elements (80; 86) extend vertically and are circulated by booth air in horizontal direction (74) .

8. Separating device according to claims 6 or 7, **characterized in that** the spacing between the separating elements (80; 86) decreases in flow direction (74) and/or in a direction which is perpendicular to the flow direction (74) .

9. Separating device according to one of claims 6 to 8, **characterized in that** filter lamellae, filter cartridges, compartment structures or chamber structures are present as separating elements (80; 86).

10. Separating device according to one of claims 4 to 9, **characterized in that** a filter module (40) comprises a base part (64) constructed as a standardised supporting structure.

11. Separating device according to one of claims 4 to 10, **characterized in that** one component, several components or all components of the filter module (40) are made from a wet-strength recycling material.

12. Separating device according to claim 11, **characterized in that** one or more of the following materials is selected as the wet strength recycling material: paper and paperboard materials, corrugated cardboard, cardboards with a vertical corrugation, cardboards with a honeycomb structure or cardboard wrap, MDF material, wood or plastic materials, polyethylene or polypropylene.

13. Separating device according to one of claims 4 to 12, **characterized in that** the filter module (40) is constructed as a modular kit.

14. Separating device according to one of claims 4 to 13, **characterized in that** the filter module (40) comprises a collecting trough (72; 94), in which separated overspray collects.

15. Separating device according to claim 14, **characterized in that** the collecting trough (94) comprises a receiving bag (98), which is arranged at the base of the filter module (40).

16. Plant for coating, in particular for painting of objects, in particular of vehicle bodies, comprising:
a) a coating booth (2), in which objects (4) can be applied with coating material and through which an airflow can be guided, which absorbs and discharges occurring overspray of the coating material;
b) a separating device (42), to which this booth air can be fed and where a majority of at least the solid materials is separated from the overspray, **characterized in that**
c) the separating device (42) is constructed according to one of claims 4 to 15.

## Revendications

1. Procédé conçu pour séparer un excédent de pulvérisation d'avec l'air, chargé d'excédent de pulvérisation, de cabines d'installations de revêtement et d'installations de laquage en particulier, dans lequel ledit excédent de pulvérisation est prélevé par un courant d'air et est guidé vers un dispositif de séparation (42) dans lequel au moins une majeure partie des substances solides est dissociée d'avec ledit excédent de pulvérisation,
sachant que
l'air de cabines, chargé d'excédent de pulvérisation, est canalisé à travers des modules filtrants (40) dans lesquels de l'excédent de pulvérisation se sépare, et qui sont réalisés sous la forme d'ensembles structurels unitaires jetables et interchangeables, comprenant un boîtier de filtration (46) et une unité de filtration (52), chaque module filtrant (40) étant remplacé par un module filtrant (40) vide, après qu'une charge limite en excédent de pulvérisation a été atteinte,
**caractérisé par le fait que**
le courant d'air, chargé d'excédent de pulvérisation, est canalisé vers un module filtrant (40) par l'intermédiaire d'un canal (38) de guidage d'air,
et
le boîtier de filtration (46) est muni d'une entrée de filtration (48) dont la réalisation est complémentaire de celle d'un manchon de sortie (50) dudit canal (38) de guidage d'air.

2. Procédé selon la revendication 1, **caractérisé par le fait qu'**un module filtrant (40) remplacé, chargé d'excédent de pulvérisation, est dirigé vers un processus d'élimination et/ou de recyclage.

3. Procédé selon la revendication 1 ou 2, **caractérisé par le fait qu'**un filtre à inertie est utilisé en tant qu'unité de filtration (52).

4. Dispositif conçu pour séparer un excédent de pulvérisation d'avec l'air, chargé d'excédent de pulvérisation, de cabines d'installations de revêtement et d'installations de laquage en particulier, dans lequel
a) le dispositif de séparation (42) fonctionne avec des modules filtrants (40) à travers lesquels peut être canalisé de l'air de cabines, chargé d'excédent de pulvérisation, et dans lesquels de l'excédent de pulvérisation se sépare ;
b) lesdits modules filtrants (40) sont réalisés sous la forme d'ensembles structurels unitaires jetables et interchangeables, comprenant un boîtier de filtration (46) et une unité de filtration (52) ;
c) ledit dispositif de séparation (42) inclut des moyens (38, 56, 68, 90) par l'intermédiaire desquels chaque module filtrant (40) peut être remplacé par un module filtrant (40) vide, après qu'une charge limite en excédent de pulvérisation a été atteinte ;
**caractérisé par le fait que**
d) le courant d'air, chargé d'excédent de pulvérisation, peut être canalisé vers un module filtrant (40) par l'intermédiaire d'un canal (38) de guidage d'air ;
e) le boîtier de filtration (46) est muni d'une entrée de filtration (48) dont la réalisation est complémentaire de celle d'un manchon de sortie (50) dudit canal (38) de guidage d'air.

5. Dispositif de séparation selon la revendication 4, **caractérisé par le fait que** l'unité de filtration (52) est réalisée sous la forme d'un filtre à inertie.

6. Dispositif de séparation selon la revendication 5, **caractérisé par le fait que** l'unité de filtration (52) comporte une multiplicité d'éléments séparateurs (80 ; 86), agencés de manière à donner naissance à un labyrinthe d'écoulement.

7. Dispositif de séparation selon la revendication 5, **caractérisé par le fait que** les éléments séparateurs (80 ; 86) s'étendent dans le sens vertical, et sont balayés périphériquement par de l'air de cabines dans la direction horizontale (74).

8. Dispositif de séparation selon la revendication 6 ou 7, **caractérisé par le fait que** la distance, comprise entre les éléments séparateurs (80 ; 86), s'amenuise dans la direction d'écoulement (74) et/ou dans une direction perpendiculaire à ladite direction d'écoulement (74).

9. Dispositif de séparation selon l'une des revendications 6 à 8, **caractérisé par** la présence, en tant qu'éléments séparateurs (80 ; 86), de lamelles de filtration, de douilles de filtration, de structures compartimentées ou de structures alvéolaires.

10. Dispositif de séparation selon l'une des revendications 4 à 9, **caractérisé par le fait qu'**un module filtrant (40) inclut une partie de fond (64) réalisée sous la forme d'une structure de support normalisée.

11. Dispositif de séparation selon l'une des revendications 4 à 10, **caractérisé par le fait qu'**un composant, plusieurs composants ou tous les composants du module filtrant (40) est (sont) fabriqué(s) en un matériau recyclé résistant à l'humidité.

12. Dispositif de séparation selon la revendication 11, **caractérisé par le fait qu'**un ou plusieurs des matériaux suivants est (sont) sélectionné(s) en tant que matériau recyclé résistant à l'humidité : des matériaux à base de papier et de carton, du carton ondulé, des cartonnages à ondulations verticales, des cartonnages à structure en nids d'abeilles ou des cartonnages d'emballage, un matériau en panneaux de fibres à densité moyenne, du bois ou des matières plastiques, notamment du polyéthylène ou du polypropylène.

13. Dispositif de séparation selon l'une des revendications 4 à 12, **caractérisé par le fait que** le module filtrant (40) est réalisé sous la forme d'un ensemble structurel modulaire.

14. Dispositif de séparation selon l'une des revendications 4 à 13, **caractérisé par le fait que** le module filtrant (40) est pourvu d'un bac collecteur (72 ; 94), dans lequel s'accumule de l'excédent de pulvérisation séparé.

15. Dispositif de séparation selon la revendication 14, **caractérisé par le fait que** le bac collecteur (94) inclut un sac de recueil (98) placé au fond du module filtrant (40).

16. Installation dévolue au revêtement, notamment au laquage d'objets et de carrosseries de véhicules en particulier, comprenant
a) une cabine de revêtement (2) dans laquelle lesdits objets (4) peuvent être exposés à du matériau de revêtement, et à travers laquelle peut être canalisé un courant d'air prélevant et évacuant un dégagement d'excédent de pulvérisation dudit matériau de revêtement ;
b) un dispositif de séparation (42) auquel cet air de cabine peut être délivré, et dans lequel au moins une majeure partie des substances solides est dissociée d'avec ledit excédent de pulvérisation,
**caractérisée par le fait que**
c) le dispositif de séparation (42) est réalisé en conformité avec l'une des revendications 4 à 15.
